# EUROPEAN PATENT APPLICATION

(11) **EP 4 403 021 A1**
(43) Date of publication of application: **24.07.2024**
(21) Application number: 24152752.2
(22) Date of filing: 19.01.2024
(51) Int. Cl.: A01G 9/24

(54) **GREENHOUSE HAVING A ROOF WITH VENTILATING WINDOWS**

(30) Priority: 20.01.2023 NL 1044525
(71) Applicant: Alcomij Beheer B.V., 2691 WR 's-Gravenzande (NL)
(72) Inventor: VAN HEIJNINGEN, Sven Peter, 2691 WR 's-Gravenzande (NL); VAN BERGEN BRAVENBOER, Frank Dirk, 2691 WR 's-Gravenzande (NL)
(74) Representative: Cramwinckel, Michiel

(57) **Abstract**

The invention is directed to a greenhouse (1) having a roof (2) provided with one or more rows (3) of ventilating roof windows (4), wherein each ventilating roof window (4) of a row (3) of ventilating roof windows is individually connected to a common drive bar (5). The ventilating roof windows (4) are connected to the common drive bar (5) via one or more operating rods (6). Part or all of the roof windows (4), referred to as operating windows (4a), are mechanically arranged to be simultaneously opened or closed by moving one or more common drive bars (5). The operating rod or rods (6) of a first part (8) of the operating windows (4a) is connected to the common drive bar such that the opening of the windows takes place at a later moment than the opening of a second part (11) of the operating windows.

## Description

The invention is directed to a greenhouse having a roof provided with one or more rows of ventilating roof windows. The ventilating roof window of a row of ventilating roof windows is individually connected to a common drive bar via an operating rod and a hinge. The common drive bar can axially move in a forward and backward direction thereby opening or closing the ventilating roof windows connected tot the common drive bar. In such a greenhouse part or all of the roof windows are mechanically arranged to be simultaneously opened or closed by moving one or more common drive bars.

Such greenhouses are well known and for example described in EP0460302. This publication describes a greenhouse having a roof provided with one or more rows of ventilating roof windows. The ventilating roof window of a row of ventilating roof windows is individually connected to a common drive bar via a special operating rod and a hinge. The drive bar operates the closing and opening of the windows by moving the drive bar in an axial direction. The operating rod consists of three parallel rods which support different end of the window.

An alternative design for opening and closing windows in a greenhouse is described in NL7304352 wherein a single drive bar operates two windows of one ridge. The pivot connecting the drive bar and the operating rods can move in a vertical plane which is perpendicular to the direction of the ridge. A disadvantage of this design is its complexity and the fact that per two windows a separate drive bar is required.

The known greenhouses can have many ventilating windows. Per row the windows can be opened or closed. A problem with such a greenhouse is that when the windows are opened from a closed position to an open position a large number of windows open simultaneously. It is mechanically difficult to only open the windows slightly. Thus when a row of windows is opened a large increase in open window area results. In order to control the climate in a greenhouse it is sometimes desired to avoid such a large increase or decrease in open window area.

The object of the present invention is to provide a greenhouse which allows a more subtle increase and decrease in open window area.

This aim is achieved with the following greenhouse. Greenhouse having a roof provided with one or more rows of ventilating roof windows, wherein each ventilating roof window of a row of ventilating roof windows is individually connected to a common drive bar,
the common drive bar can axially move in a forward and backward direction thereby opening or closing the ventilating roof windows connected tot the common drive bar,
wherein the ventilating roof windows are connected to the common drive bar via one or more operating rods connected to the common drive bar by means of a hinge,
wherein part or all of the roof windows, referred to as operating windows, are mechanically arranged to be simultaneously opened or closed by moving one or more common drive bars and
wherein the operating rod or rods of a first part of the operating windows is connected to the common drive bar such that the opening of the windows takes place at a later moment than the opening of a second part of the operating windows.

Applicants found that by having different connections between the common drive bar and the windows which are to be operated it is possible to postpone the moment that the some of the connected windows open relate to differently connected windows. This allows one to initially open a lower number of windows resulting in that the increase in open window area is less. Further advantages will be discussed when describing the invention in more detail.

The greenhouse is provided with one or more rows of ventilating roof windows, wherein each ventilating roof window of a row of ventilating roof windows is individually connected to a common drive bar. One row of ventilating windows connected to one drive bar may have between 2 and 100 ventilating windows and suitably more than 10 ventilating windows. One greenhouse may have between 2 and 100 rows of ventilating windows and preferably more than 10 rows of ventilating windows. Part or all of the ventilating roof windows are mechanically arranged to be simultaneously opened or closed by moving one or more common drive bars. These ventilating windows which are operated simultaneously are referred to as operating windows. By mechanically arranged is here meant that a row of ventilating roof windows open and close by mechanically moving the drive bar forwards or backwards in an axial direction or that more than one row of ventilating roof windows open and close by mechanically moving the associated drive bars forwards or backwards in an axial direction wherein the drive bars move simultaneously in a backward or forward direction. The invention now provides for a process for opening and closing of ventilating roof windows as present in the roof of a greenhouse by performing a single mechanically driven operation which mechanically driven operation drives one or more drive bars in a forward or backward movement thereby opening or closing ventilating roof windows connected to the drive bar or drive bars via operating rods and wherein part of the windows opens later than another part of the windows. This process is preferably performed in the greenhouse of this invention.

The windows may be connected to the common drive bar such that the opening of the windows takes place at a later moment than the opening of the second part of the operating windows as will be explained below. The operating rods of the first part of the operating windows are preferably connected to the common drive bar by means of a hinge which can move axially along the common drive bar for a certain distance A from a closing position to an opening position. Alternatively or in combination the operating rods of the first part of the operating windows have a variable length for a certain distance C.

When some of the windows are provided with a hinge which can axially move along the common drive bar along a greater length than the other hinges it is possible to postpone the moment that these connected windows open relative to windows which are connected to the drive bar with hinges which are fixed to the drive bar or which can move a smaller distance along the common drive bar.

When some of the windows are provided with an operating rod which can have a variable length which ranges between the length of a fixed length operating rod and smaller it is possible to postpone the moment that these connected windows open relative to windows which are connected to the drive bar with an operating rod having the fixed length.

The second part of the operating windows may be connected to the common drive bar by means of an operating rod having a fixed length and a hinge which is fixed to the common drive bar at one axial position.

All of the operating roof windows in the row of ventilating roof windows may be connected to the common drive bar by means of a hinge which can move axially along the common drive bar. The greenhouse may then be provided with different rows of operating roof windows which are connected to a different common drive bar and wherein the hinge is fixed. Alternatively the hinge may be able to move axially along the common drive bar for a certain distance B from a closing position to an opening position wherein the distance A is greater than the distance B. When these common drive bars are simultaneously moved forwards or backwards the windows of the first described row will then open later and close earlier than the remaining windows.

It is also possible that a first part of the operating roof windows in the row of ventilating roof windows are connected to the common drive bar by means of a hinge which can move axially along the common drive bar for a certain distance A from a closing position to an opening position and another second part of the of the operating roof windows in the row of ventilating roof windows are connected to the common drive bar by means of a hinge which is fixed to the common drive bar at one axial position. Optionally the second part of the ventilating roof windows in the same row of ventilating roof windows are connected to the common drive bar by means of a hinge which can move axially along the common drive bar for a certain distance B from a closing position to an opening position wherein the distance A is greater than the distance B. When this common drive bar is moved forwards or backwards the first part of the windows will then open later and close earlier than the second part of the windows.

The hinge of the first part of the operating roof windows may be slidably connected to the common drive bar between two end stoppers. The stoppers are connected to the common slide drive bar at an axially fixed position. The stoppers are spaced apart and define the closing position and the opening position. The stoppers may be provided with cushion means to dampen the movement of the hinge when it reaches the stopper. Preferably the stoppers can be fixed at different positions along the common drive bar. This allows one to vary the length A and B per window and thus influence the moment that an individual window opens.

Preferably the hinges which are slidably connected to the common drive bar are connected to one end of an in length variable cushion means. The opposite end of the cushion means is fixed to the common drive bar. The cushion means will avoid that the windows cannot easily and quickly move when wind passes the window. By avoiding such movements damage to the windows can be avoided. Preferably the cushion means is a hydraulic cylinder or an air cylinder because of its simplicity. The air cylinder is provided with an air opening allowing the air cylinder to vary in length. Preferably the opening is provided with a valve which can open or close the air opening. Preferably the valve of an air cylinder connected to a hinge can be independently closed and opened relative to the valves of the air cylinders of the other hinges. By having this option it is possible to selectively fix the hinge at one axial position along the common drive bar for a selection of the windows by closing the valve and have another selection of the windows have a hinge which can move axially along the common drive bar where the valve is open. It is also possible to vary the position at which the hinge is axially fixed along the common drive bar. This may be achieved by closing the valve when axially moving the common drive bar at the moment where the air cylinder has the desired length relative to its opposite end.

The valves may be opened and closed manually. Preferably the valves are opened and closed by a remote control. The valves may be electronically operated and suitably only have an open and closed position.

The in length variable air or hydraulic cylinder can suitably be individually operated resulting in that an individual roof window of the first part of operating windows can become a roof window of the second part of the operating windows and vice versa. Thus by providing a large number or all of the operating roof windows with such an air or hydraulic cylinder one achieves flexibility as to which windows should open earlier than other windows.

Preferably all of the operating windows are connected to the drive bar with the in length variable air or hydraulic cylinder. The in length variable cylinder will then be suitably operated individually and controlled remotely for more than one in length variable cylinders. This allows one to choose which operating windows will be the first part and which operating windows will be the second part of the operating windows according to this invention.

The invention is also directed to a greenhouse having a roof provided with one or more rows of ventilating roof windows, wherein each ventilating roof window of a row of ventilating roof windows is individually connected to a common drive bar, the common drive bar can axially move in a forward and backward direction thereby opening or closing the ventilating roof windows connected tot the common drive bar, and wherein the ventilating roof windows are connected to the common drive bar via one or more operating rods and an in length variable air or hydraulic cylinder as described above. The air cylinder is provided with an air opening allowing the air cylinder to vary in length and wherein the opening is provided with a valve which can independently open or close the air opening of an air cylinder such that an individual window can be opened or closed while the other windows remain closed or open respectively.

The hinge of the first part of the ventilating roof windows and the optional hinge of the second part of the ventilating roof windows may also be individually connected to a linear actuator. Such means can individually move the hinge axially along the common drive bar for the distance A and optionally move another hinge individually along the common drive bar for the distance B or even not move the hinge at all. Possible actuators are hydraulic, electromagnetic or electromechanical actuators. An advantage of an actuator is that the length at which they expand can be easily controlled and individually controlled.

The operating rods of the first part or all of the operating roof windows are individually provided with a linear actuator such to vary the length of the operating rods for the variable length C. Preferably the linear actuator can be operated individually and controlled remotely for more than one linear actuator. If all of the operating windows are provided with such a linear actuator, it is possible to choose which operating windows will be the first part and which operating windows will be the second part of the operating windows according to this invention.Preferably the linear actuators which can move the hinge and/or expand the rod can be individually operated resulting in that an individual roof window of the first part of operating windows can become a roof window of the second part of the operating windows and vice versa. Thus by providing a large number or all of the operating roof windows with such an actuator one achieves flexibility as to which windows should open earlier than other windows.

The invention is also directed to a greenhouse having a roof provided with one or more rows of ventilating roof windows, wherein each ventilating roof window of a row of ventilating roof windows is individually connected to a common drive bar, the common drive bar can axially move in a forward and backward direction thereby opening or closing the ventilating roof windows connected tot the common drive bar, wherein the ventilating roof windows are connected to the common drive bar via one or more operating rods which operating rods are provided with a linear actuator which can vary the length of the operating rods, which linear actuator or actuators are independently arranged for one ventilating roof window to vary the length of the operating rods operating this ventilating roof window such that this ventilating roof window can be opened or closed while the other ventilating roof windows remain closed or open respectively.

The roof may be any type of roof known for greenhouses. Suitably the roof is a saddle roof.

The invention will be illustrated by the following non-limiting figures.

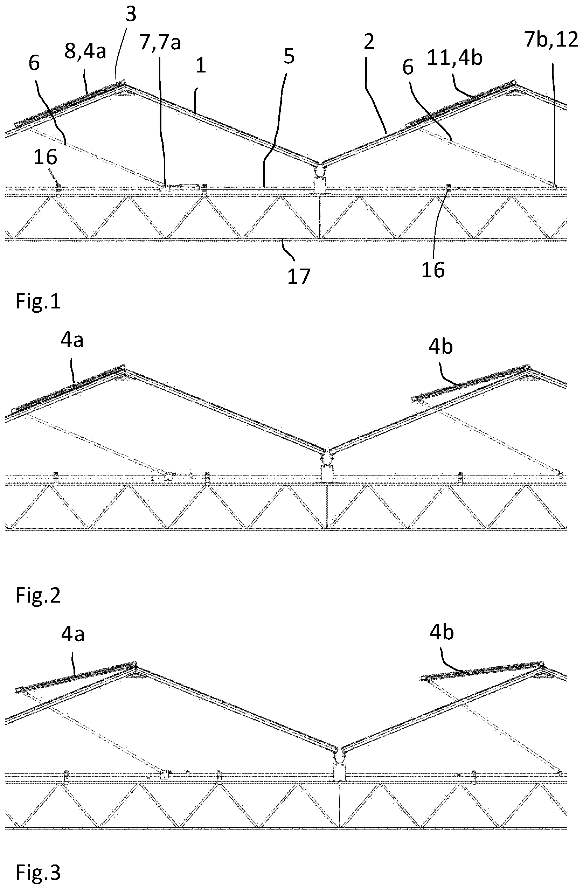

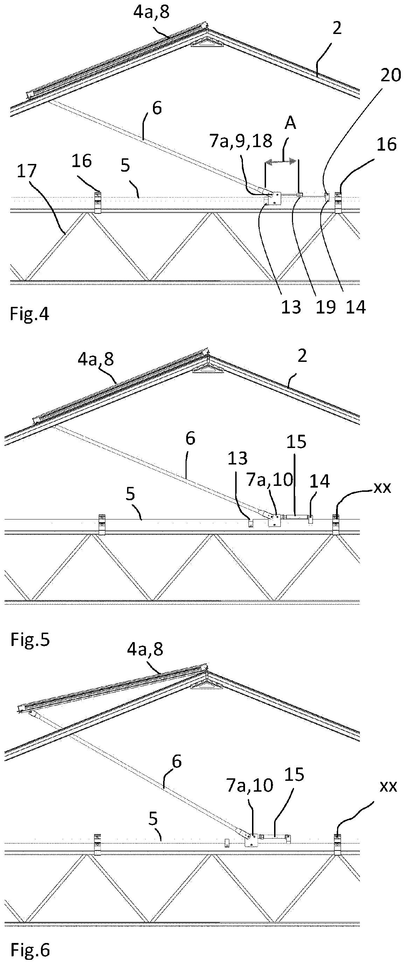

Figure 1 shows part of a greenhouse (1) having a saddle roof (2) provided with a row (3) of ventilating roof windows (4) of which two are shown. The ventilating roof window (4a,4b) is individually connected to a common drive bar (5). The common drive bar (5) can axially move in a forward and backward direction thereby opening or closing the ventilating roof windows (4) connected tot the common drive bar (5). These operating roof windows (4a,4b) are connected to the common drive bar (5) via one or more operating rods (6) connected to the common drive bar (5) by means of a hinge (7). Window (4a) is connected to the common drive bar (5) by means of a hinge (7a) which can move axially along the common drive bar (5) as further shown in Figure 4. Window (4a) belongs to the first part (8) of the operating roof windows (4). Window (4b) is connected to the common drive bar (5) by means of a hinge (7b) which is fixed to the common drive bar (5) at one axial position (12). Window (4b) belongs to the second part (11) of the operating roof windows (4). The common drive bar (5) is supported by a rail brackets (16) which rail brackets (16) are fixed to a truss (17) which is part of the roof support structure of greenhouse (1). In this figure the windows (4a,4b) are closed.
In Figure 2 the same part of a greenhouse (1) is shown as in Figure 1. In this figure the common drive bar has moved to the left thereby opening window (4b) while window (4a) remains closed.
In In Figure 3 the same part of a greenhouse (1) is shown as in Figure 1-2. In this figure the common drive bar has moved further to the left thereby opening window (4b) and window (4a). As can be seen window (4a) is more open than window (4a).
Figure 4 is a detail of Figure 1 showing only window (4a). In this figure hinge (7a) is shown which is in its closing position (9). Hinge (7a) ) is slidably connected to the common drive bar (5) and connected to one end (18) of an in length variable air cylinder (19). The opposite end (20) of air cylinder (19) is fixed to the common drive bar (5) at stopper (14). The air cylinder (19) is in its extended position. Hinge can move axially along the common drive bar (5) for a certain distance A. A stopper (13) is shown which avoids that the air cylinder is pulled apart.
Figure 5 is a detail of Figure 2 showing only window (4a). Common drive bar (5) and its filed stoppers (13,14) have moved to the left and air cylinder is in its most contracted position. Hinge (7a) has remained in position relative to the greenhouse (1) itself. Because the air cylinder (19) is in its most contracted position any further movement of the common drive bar to the left will result in a push force on operating rod (6) and opening window (4a) as shown in Figure 6. For this reason hinge (7a) is in its opening position (10) in Figures 5 and 6. The air cylinder in Figures 4 and 5 may also be a hydraulic cylinder.

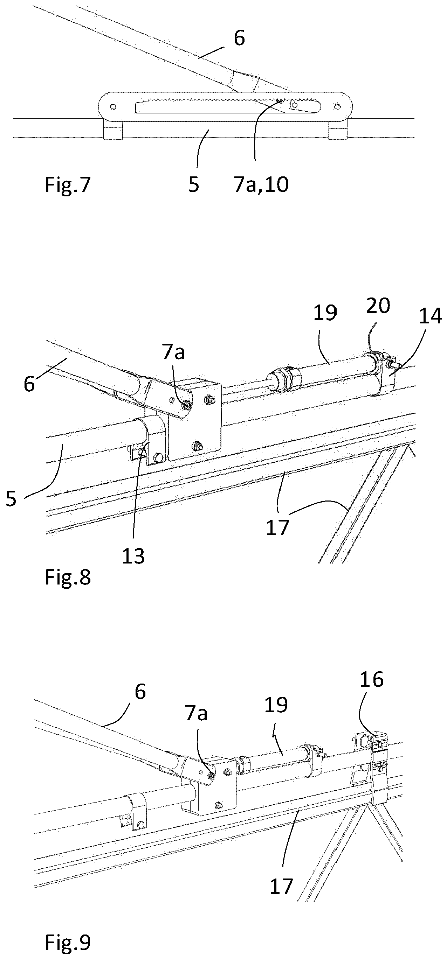

Figure 7 shows a possible hinge (7a) slidably connected to the common drive bar (5) in its opening position (10).
Figure 8 shows a detail of the hinge (7a) of Figures 1 and 4 in its closing position (9).
Figure 9 shows a detail of the hinge (7a) of Figures 3 and 6 in its opening position (10).

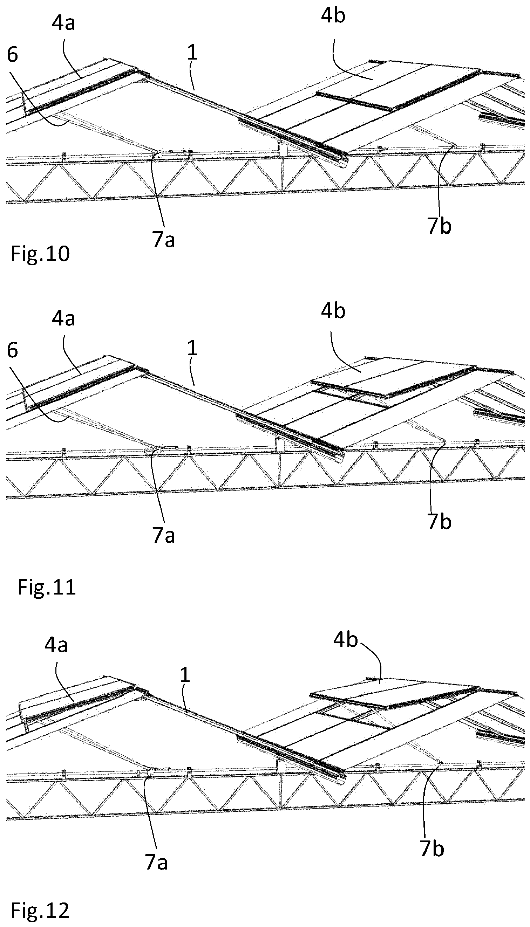

Figure 10 is a three-dimensional cut out view of the greenhouse part as shown in Figure 1 where both windows (4a,4b) are closed.
Figure 11 is a three-dimensional cut out view of the greenhouse part as shown in Figure 2 where window (4b) opens and window (4a) remains closed.
Figure 12 is a three-dimensional cut out view of the greenhouse part as shown in Figure 3 where both windows (4a,4b) are open, wherein the opening area of window (4a) is smaller than the opening area of window (4b).

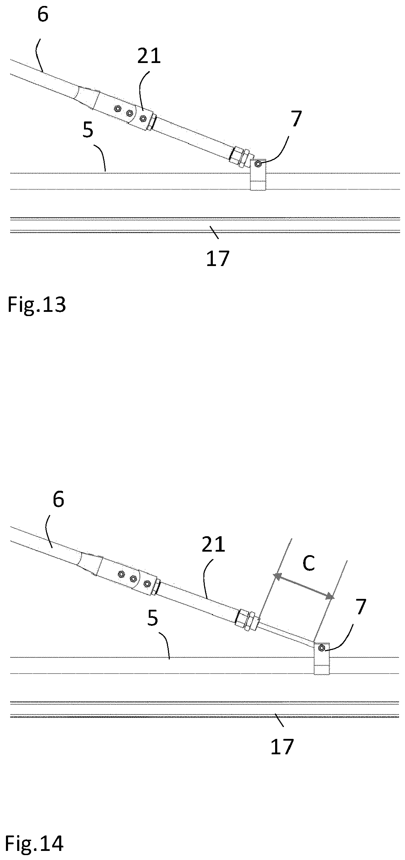

Figures 13 and 14 show an operating rod (6) connected to a hinge (7) fixed to a common drive bar (5) via an actuator (21). Part of truss (17) of the greenhouse is shown. In Figure 13 the rod has its smallest length. In this position the connected window will open when drive bar (5) is moved to the left. In Figure 14 the actuator (21) is expanded to its maximum length. Length C is the variable length pf actuator (21). When drive bar (5) is moved to the left actuator (21) can retract to the position of Figure 13 before the connected window opens. By remotely fixing the actuator (21) in length as shown in Figure 14 the window will open directly when moving the drive bar (5) to the left. This illustrates that an individual roof window (4) of the first part (8) of operating windows (4a) can become a roof window (4) of the second part (11) of the operating windows (4a) by controlling the actuator (21). By again releasing the actuator (21) to vary in length the reverse can be achieved.

## Claims

1. Greenhouse (1) having a roof (2) provided with one or more rows (3) of ventilating roof windows (4), wherein each ventilating roof window (4) of a row (3) of ventilating roof windows is individually connected to a common drive bar (5),
the common drive bar (5) can axially move in a forward and backward direction thereby opening or closing the ventilating roof windows (4) connected to the common drive bar (5),
wherein the ventilating roof windows (4) are connected to the common drive bar (5) via one or more operating rods (6) connected to the common drive bar (5) by means of a hinge (7),
wherein part or all of the roof windows (4), referred to as operating windows (4a), are mechanically arranged to be simultaneously opened or closed by moving one or more common drive bars (5) and
wherein the operating rod or rods of a first part (8) of the operating windows (4a) is connected to the common drive bar such that the opening of the windows takes place at a later moment than the opening of a second part (11) of the operating windows.

2. Greenhouse according to claim 1, wherein the operating rods (6) of the first part (8) of the operating windows (4a) are connected to the common drive bar (5) by means of a hinge (7a) which can move axially along the common drive bar (5) for a certain distance A from a closing position (9) to an opening position (10) and/or wherein the operating rods (6) of the first part (8) of the operating windows (4a) have a variable length for a certain distance C.

3. Greenhouse according to claim 2, wherein the second part (11) of the operating windows (4a) are connected to the common drive bar (5) by means of an operating rod (6) having a fixed length and a hinge (7b) which is fixed to the common drive bar at one axial position (12).

4. Greenhouse according to any one of claims 2-3, wherein the hinge (7a) of the first part (8) of the operating roof windows (4a) is slidably connected to the common drive bar (5) between two end stoppers (13,14) connected to the common drive bar (5) defining the closing position (9) and the opening position (10).

5. Greenhouse according to any one of claims 2-4, wherein the hinge (7a) of the first part (8) of the operating roof windows (4a) is slidably connected to the common drive bar (5) and connected to one end of an in length variable air cylinder or hydraulic cylinder and wherein the air cylinder (19) or hydraulic cylinder has an opposite end (20) which is fixed to the common drive bar (5).

6. Greenhouse according to claim 5, wherein the air cylinder (19) is provided with an air opening allowing the air cylinder to vary in length and wherein the opening is provided with a valve which can open or close the air opening.

7. Greenhouse according to claim 6, wherein the valve of an air cylinder (19) connected to a hinge (7a) can be independently closed and opened relative to the valves of the air cylinders of the other hinges (7a).

8. Greenhouse according to any one of claims 5-7, wherein the in length variable air cylinder (19) or hydraulic cylinder can be operated individually and controlled remotely for more than one in length variable air cylinders (19).

9. Greenhouse according to any one of claims 5-7, wherein part or all of the roof windows (4), referred to as operating windows (4a) are connected to the common drive bar (5) by means of an operating rod (6) having a fixed length and a hinge (7b) which is fixed to the common drive bar at one axial position (12),
wherein the hinge (7a) of the first part (8) of the operating roof windows (4a) is slidably connected to the common drive bar (5) between two end stoppers (13,14) connected to the common drive bar (5) defining the closing position (9) and the opening position (10),
wherein the hinge (7a) of the first part (8) of the operating roof windows (4a) is slidably connected to the common drive bar (5) and connected to one end of an in length variable air cylinder (19) or hydraulic cylinder and wherein the air cylinder (19) or hydraulic cylinder has an opposite end (20) which is fixed to the common drive bar (5) and
wherein the in length variable air cylinder (19) or hydraulic cylinder can be operated individually and controlled remotely for more than one in length variable air cylinders (19) or hydraulic cylinders.

10. Greenhouse according to any one of claims 2-4, wherein the hinges (7a) of the first part (8) or all of the operating roof windows (4a) are individually connected to a linear actuator which linear actuator can individually move the hinge (7a) axially along the common drive bar (5) for the distance A.

11. Greenhouse according to any one of claims 2-4, wherein the operating rods (6) of the first part (8) or all of the operating roof windows (4a) are individually provided with a linear actuator (21) such to vary the length of the operating rods (6) for the variable length C.

12. Greenhouse according to any one of claims 10-11, wherein the linear actuator can be operated individually and controlled remotely for more than one linear actuator.

13. Greenhouse according to any one of claims 1-12, wherein the roof is a saddle roof (16).

14. Process for opening and closing of ventilating roof windows as present in the roof of a greenhouse by performing a single mechanically driven operation which mechanically driven operation drives one or more drive bars in a forward or backward movement thereby simultaneously opening or closing between 2 and 100. ventilating roof windows connected to a single drive bar via operating rods connecting the drive bar and the ventilating roof windows and wherein part of the windows opens later than another part of the windows.

15. Process according to claim 14 as performed in a greenhouse according to any one of claims 1-13.
